# EUROPÄISCHE PATENTANMELDUNG

(11) **EP 2 813 320 A2**
(43) Veröffentlichungstag der Anmeldung: **17.12.2014**
(21) Anmeldenummer: 14172144.9
(22) Anmeldetag: 12.06.2014
(51) Int. Cl.: B23Q 11/08, F16J 3/04, F16P 3/02

(54) **Schutzabdeckung für eine Bearbeitungsmaschine und Verfahren zur Herstellung der Schutzabdeckung**

(30) Priorität: 13.06.2013 DE 102013106134
(71) Anmelder: August Wenzler GmbH, 78549 Spaichingen (DE)
(72) Erfinder: Wenzler, Wolfgang, 78588 Denkingen (DE); Schweikert, Thomas, 78655 Dunningen (DE); Fleig, Thomas, 78112 St. Georgen (DE)
(74) Vertreter: Rüger, Barthelt & Abel

(57) **Zusammenfassung**

Die Erfindung betrifft eine Schutzabdeckung (15) sowie ein Verfahren zu deren Herstellung. Die Schutzabdeckung (15) wird aus einer mehrschichtigen Platte aus einem Verbundwerkstoff hergestellt, die einen Kern (18) aus Kunststoff sowie auf den beiden entgegengesetzten Flachseiten des Kerns (18) jeweils eine Außenschicht (22) aus einer metallischen und beispielsgemäß Aluminiumenthaltenden Legierung aufweist. Die Außenschicht (22) ist flächig mit dem Kern (18) verbunden. An Gelenkabschnitten (23) werden die beiden Außenschichten (22) durch Einbringen von Nuten (24) entfernt, wobei die Nuten (24) sich in einer Lamellenerstreckungsrichtung (L) geradlinig durch ein Abdeckteil (17) der Schutzabdeckung (15) erstrecken. Dadurch werden Lamellen (21) gebildet, die einen mehrschichtigen Aufbau aufweisen, wobei jeweils zwei unmittelbar benachbarte Lamellen (21) gelenkig durch einen Gelenkabschnitt (23) miteinander verbunden sind. Das so gebildete Abdeckteil (17) lässt sich ziehharmonikaartig zusammenschieben bzw. auseinanderziehen. Es ist außerdem sehr einfach herzustellen. Das Abdeckteil (17) weist eine Federwirkung sowie eine Dämpfungswirkung auf. Dadurch ist es möglich, ein mit einem Schlitten (16) einer Bearbeitungsmaschine verbundenes bewegtes Ende (35) des Abdeckteils (17) mit hohen Geschwindigkeiten und Beschleunigungen zu bewegen ohne eine Longitudinalschwingung anzuregen, die das Abdeckteil (17) beschädigen könnte.

## Beschreibung

Die Erfindung betrifft eine Schutzabdeckung für eine Bearbeitungsmaschine und Verfahren zur Herstellung der Schutzabdeckung.

Die Schutzabdeckung dient dazu, einen Arbeitsraum der Bearbeitungsmaschine zumindest teilweise, z.B. zu einer Führung, einer Spindel oder dergleichen, abzugrenzen. Eine Bearbeitungsmaschine kann mehrere solcher Schutzabdeckungen aufweisen. Bei Arbeitsmaschinen, beispielsweise Bearbeitungszentren, ist häufig ein bewegbar geführt gelagerter Schlitten vorhanden, der eine oder mehrere Arbeitsspindeln oder ein oder mehrere Werkstücke trägt. Das Werkzeug und das Werkstück lassen sich so relativ zueinander im Arbeitsraum der Bearbeitungsmaschine bewegen und positionieren. Während der Bearbeitung müssen die Schlittenführung und der Schlittenantrieb zu dem Arbeitsraum hin abgedeckt werden, um zu verhindern, dass Späne, Kühlschmiermittel oder gegebenenfalls auch Werkzeug- oder, im Falle eines versehentlichen Bruches, Werkstückteile den Arbeitsraum verlassen. Durch die Schutzabdeckung werden Lager, Führungen, Antriebe oder andere Teile der Maschine gegen Verunreinigungen oder Beschädigungen durch Späne und Kühlschmiermittel geschützt.

Die Maschinenabdeckung soll nach Art eines Faltenbalgs auseinandergezogen und zusammengeschoben werden können.

Beispielsweise wird ein Ende der Schutzabdeckung an dem beweglichen Schlitten und das andere Ende an einem unbeweglichen Element, beispielsweise einem Gestellteil der Bearbeitungsmaschine befestigt.

Die Schutzabdeckung soll auch für Bearbeitungsmaschinen verwendet werden können, die mit einer Minimalmengenschmierung arbeiten. Dabei können noch sehr heiße Späne in Kontakt mit der Schutzabdeckung gelangen. Die Schutzabdeckung muss auch gegen die eingesetzten Kühlschmierstoffe resistent sein.

Eine als Faltenbalg ausgeführte Schutzabdeckung ist aus DE 37 31 770 A1 bekannt. Der Faltenbalg wird aus einer Kunststoffplatte hergestellt. Durch Einbringen einer Nut auf jeweils einer Seite des Kunststoffmaterials wird dieses zur Bildung von Filmscharnieren gezielt geschwächt. Entlang der Nut kann die Kunststoffplatte abgewinkelt werden. Dadurch bildet sich zwischen zwei unmittelbar benachbarten Nuten jeweils eine Lamelle, so dass jeweils zwei benachbarte Lamellen über ein Filmscharnier gelenkig miteinander verbunden sind.

Das Kunststoffmaterial wird an den Scharnieren geschwächt, wodurch sich die Gefahr von Rissbildung und Materialbruch an den Nuten erhöht. Zudem kann der Kunststoff-Faltenbalg ein in Bewegungsrichtung des Schlittens und des Faltenbalgs schwingungsfähiges System bilden. Bei einer Schlittenbewegung mit hoher Beschleunigung kann sich eine Longitudinalwelle in Bewegungsrichtung ausbreiten. Wenn der Schlitten noch während der Ausbreitung der Longitudinalwelle in die eine Richtung seine Bewegungsrichtung mit großer Verzögerung und Beschleunigung umkehrt, wird der Faltenbalg stark beansprucht und es kann zu Materialermüdung und Materialversagen kommen, was die Standzeit des Faltenbalgs entsprechend reduziert.

DE 295 00 395 U1 beschreibt eine faltbare Schutzabdeckung. Die Schutzabdeckung weist ein Abdeckteil mit mehreren Lamellen auf. Jeweils zwei Lamellen sind über ein separates Kopplungselement miteinander verbunden. Die Lamellen haben nutartige Öffnungen, in die die Kopplungselemente eingerastet werden können. Das Herstellen und das Montieren einer solchen Schutzabdeckung ist aufwendig.

Es ist eine Aufgabe der vorliegenden Erfindung, eine einfach herzustellende Schutzabdeckung zu schaffen, die eine hohe Stabilität aufweist und den Betriebsbedingungen im Arbeitsraum einer Bearbeitungsmaschine lange standhält.

Diese Aufgabe wird durch eine Schutzabdeckung mit den Merkmalen des Patentanspruches 1 sowie ein Verfahren mit den Merkmalen des Patentanspruches 15 gelöst.

Die Schutzabdeckung weist ein zumindest abschnittsweise mehrschichtiges Abdeckteil auf, das mehrere miteinander verbundene Lamellen aufweist. Das Abdeckteil hat einen Kern bzw. mittlere Schicht aus einem Kunststoffmaterial, insbesondere Polypropylen. Das Kunststoffmaterial ist vorzugsweise thermoplastisch. Die Lamellen des Abdeckteils weisen jeweils zwei an voneinander weg weisenden Flachseiten angeordnete Außenschichten aus einem vom Kunststoffmaterial des Kerns verschiedenen Material auf, die auf entgegengesetzten Seiten auf den Kern aufgebracht sind. Bei den Außenschichten kann es sich insbesondere um ein Metall und vorzugsweise eine Aluminium aufweisende Legierung handeln. Insbesondere wird für die Außenschichten eine Aluminiumknetlegierung verwendet. Bei einem Ausführungsbeispiel bestehen die Außenschichten aus AlMg 4,5 Mn 0,4 (EN AW-5182). Die Außenschichten an den Lamellen sind flächig, insbesondere stoffschlüssig, mit dem Kern verbunden. Vorzugsweise haben die beiden außenliegenden Schichten eine übereinstimmende Dicke.

Die Lamellen haben einen sandwichartigen Aufbau mit einem Kern aus Kunststoff und zwei Außenschichten, vorzugsweise aus einer Aluminiumknetlegierung. Dadurch erhalten die Lamellen bei geringem Gewicht eine große Stabilität und können in einer Lamellenerstreckungsrichtung mit entsprechend großen Länge bis zu etwa 2 Metern ausgeführt werden, ohne durch ihr Eigengewicht durchzuhängen. Mithin weisen die Lamellen durch den mehrschichtigen (dreischichtigen) Aufbau eine ausreichende Stabilität und Biegesteifigkeit auf. Außerdem kann durch die Außenschicht eine sehr glatte Außenoberfläche der Lamellen erreicht werden, die sich sehr leicht reinigen lässt. Die bei einem bevorzugten Ausführungsbeispiel verwendete Aluminiumknetlegierung hat sehr gute wärmeleitende Eigenschaften, so dass heiße Späne, die auf die Lamellen auftreffen, rasch abgekühlt werden.

Jeweils zwei unmittelbar benachbarte Lamellen sind über einen dazwischen angeordneten Gelenkabschnitt gelenkig miteinander verbunden. Jeder Gelenkabschnitt ist durch einen Abschnitt des Kerns (d.h. Der mittleren Schicht) des Abdeckteils gebildet. Der Kern des Abdeckteils erstreckt sich insbesondere durchgängig entlang des gesamten Abdeckteils. Der Kern ist aus einem einheitlichen Material ohne Naht- oder Fügestellen einstückig hergestellt. Die Dicke des Kerns ist an jeder Stelle des Abdeckteils konstant. Somit ist die Dicke des Kerns an jedem der Gelenkabschnitt genauso groß wie an den beiden angrenzenden Lamellen. Vorzugsweise ist die Dicke des Kerns größer, insbesondere erheblich (d.h. zumindest viermal) größer, als die jeweilige Dicke der Außenschichten.

Das Abdeckteil der Schutzabdeckung lässt sich daher sehr einfach aus einer mehrschichtigen Platte mit einem Kunststoffkern und zwei Außenschichten herstellen, wie sie z.B. als Aluminum-beschichtete Kunststoffplatten komerziell verfügbar sind. Zur Ausbildung der Abdeckung werden die beiden Außenschichten an den Gelenkabschnitten in streifenförmigen Zonen zumindest teilweise und vorzugsweise vollständig entfernt. Die Zonen sind vorzugsweise an beiden Seiten der Platte deckungsgleich zueinander angeordnet. Vorzugsweise sind sie gleich breit, sie können aber auch voneinander abweichende Breiten aufweisen (z.B. breiter an einer Gelenkbiegungs-Außenseite und schmaler an einer gelenkbiegungs-Innenseite). Vorzugsweise ist die Breite der Zonen gleich oder größer als die Dicke des Kerns. Die gelenkigen Verbindungen zwischen den Lamellen lassen sich sehr einfach durch Materialabtrag der Außenschichten herstellen.

Die erfindungsgemäße Schutzabdeckung eignet sich durch ihren Aufbau auch für Bearbeitungsmaschinen, bei denen sich ein Schlitten mit großer Beschleunigung bzw. Geschwindigkeit bewegt. Wie erläutert, ist das Abdeckteil zumindest an einer Seite mit einem bewegbaren Schlitten der Bearbeitungsmaschine verbunden. Das Abdeckteil muss daher den sich aus der Geschwindigkeit und der Beschleunigung des Schlittens ergebenden Beanspruchungen stand halten. Erfindungsgemäß ist dies dadurch erreicht, dass die Lamellen einerseits durch den mehrschichtigen Aufbau sehr stabil und steif und andererseits sehr leicht ausgebildet sind. Die Gelenkabschnitte erzeugen beim Biegen des Abdeckteils bzw. beim Abwickeln zweier benachbarter Lamellen zueinander eine Federkraft, die die beiden gelenkig verbundenen Lamellen auseinanderdrückt. Dies bewirkt, dass sich die Lamellen des Abdeckteils beim Bewegen des Schlittens schnell ohne zu schwingen gleichmäßig öffnen. Alle Öffnungswinkel zwischen zwei an einem Gelenkabschnitt miteinander verbundenen Lamellen vergrößern sich beim Auseinanderziehen des Abdeckteils und Verringern sich beim Zusammenschieben des Abdeckteils ohne wesentlichen zeitlichen Verzug und ohne in eine Schwingung zu geraten. Außerdem bilden die Gelenkabschnitte Biegescharniere mit hoher innerer Dämpfung. Verbunden mit dem geringen Gewicht der Lamellen wird ein Aufschaukeln von Schwingungen auch bei hochdynamischem Betrieb vermieden.

Das Abdeckteil mit dem durchgehenden Kunststoffkern und den steiferen, mehrschichtigen Lamellen dämpft Anregungen durch hohe Beschleunigungen des Schlittens stark ab, so dass sich entlang des Abdeckteils keine oder lediglich in geringem Maße Longitudinalwellen ausbreiten. Schwingungsanregungen werden stark bedämpft bzw. getilgt. Dadurch sind auch rasche Bewegungsänderungen mit hohen Beschleunigungen möglich, ohne das Abdeckteil der Schutzabdeckung zu stark zu beanspruchen oder zu beschädigen.

Trotz dieser Eigenschaften weist das Abdeckteil ein geringes Gewicht auf, beispielsweise weniger als 2 Kilogramm pro Quadratmeter. Die Trägheit des Abdeckteils ist dadurch ebenfalls gering.

Die Dicke des Kerns beträgt vorzugsweise 0,6 bis 1,2 mm und bei einem Ausführungsbeispiel 0,8 mm. Die Dicke jeder Außenschicht der Lamellen beträgt vorzugsweise 0,1 bis 0,3 und bei einem Ausführungsbeispiel 0,2 mm.

Durch den erfindungsgemäßen Aufbau lässt sich ein Optimum zwischen der Steifigkeit der Lamellen, der Zugfestigkeit des Abdeckteils und der Dämpfung auch bei hochdynamischen Anregungen des Abdeckteils durch die Bewegung des Schlittens der Bearbeitungsmaschine erreichen.

An den Gelenkabschnitten ist das Abdeckteil vorzugsweise frei von den Außenschichten und insbesondere frei von jeglicher Beschichtung. Jeder Gelenkabschnitt wird insbesondere ausschließlich durch den Kern gebildet. Hierzu kann beispielsweise entlang des Gelenkabschnitts von beiden Seiten her jeweils eine Nut in einer Lamellenerstreckungsrichtung in die beiden Außenschichten eingebracht und dadurch die Außenschicht vorzugsweise vollständig entfernt werden. Die Nut erstreckt sich insbesondere geradlinig durchgängig in Lamellenerstreckungsrichtung entlang des gesamten Abdeckteils. Vorzugsweise hat die Nut eine Breite von 3 bis 5 und insbesondere 4 mm.

Vorzugsweise weist jede Lamelle in Lamellenerstreckungsrichtung an seinen beiden entgegengesetzten Enden jeweils ein Führungsmittel auf. Das Führungsmittel ist dazu vorgesehen, mit einem entsprechenden Gegenführungsmittel zusammenzuarbeiten, so dass das Abdeckteil in einer Bewegungsrichtung geführt bewegbar gelagert ist, in der es auseinandergezogen und zusammengeschoben werden kann.

Insbesondere weist das Führungsmittel eine Führungsaussparung auf. Als Gegenführungsmittel kann beispielsweise eine Führungsschiene dienen, die zum Beispiel mit dem Maschinengestell der Bearbeitungsmaschine verbunden sein kann. Die Führungsaussparung kann sehr einfach in die Lamelle eingebracht werden. Der Verbundwerkstoff aus Kunststoff mit den Außenbeschichtungen lässt sich einfach bearbeiten und bildet eine stabile Berandung der Führungsaussparung.

Es ist ferner vorteilhaft, ein Begrenzungsmittel vorzusehen, das den Öffnungswinkel zwischen zwei unmittelbar benachbarten Lamellen begrenzt. Dadurch kann verhindert werden, dass sich zwei benachbarte Lamellen in einer gemeinsamen Ebene ausrichten und ausgehend davon in eine nicht gewünschte Richtung abwinkeln.

Bei einem bevorzugten Ausführungsbeispiel kann das Begrenzungsmittel durch eine in die Führungsaussparungen der Lamellen eingreifende Führungsschiene gebildet sein. Der Öffnungswinkel bzw. Faltenwinkel zwischen zwei unmittelbar benachbarten Lamellen beträgt vorzugsweise maximal 140° bis 160° und bei einem Ausführungsbeispiel maximal 150°.

Jedes Führungsmittel kann außerdem wenigstens einen Gleitkörper aufweisen. Der Gleitkörper kann angrenzend an die Führungsaussparung an der Lamelle angeordnet sein und die Gleitreibung gegenüber einer Führungsschiene verringern. Die Lamellen liegen dann nicht unmittelbar an der Führungsschiene, sondern über die jeweils angeordneten Gleitkörper an der Führungsschiene an.

Dabei kann es vorteilhaft sein, wenn die Gleitkörper kraftschlüssig und/oder formschlüssig mit der Lamelle des Abdeckteils verbunden sind. Dadurch lässt sich die Schutzabdeckung besonders einfach herstellen.

Die beschriebene erfindungsgemäße Schutzabdeckung lässt sich sehr einfach wie folgt herstellen:
Zunächst wird eine mehrschichtige Platte (Sandwichplatte) mit einem Kern aus einem flexiblen Kunststoffmaterial und auf den gegenüberliegenden Flachseiten vorhandenen Außenschichten aus einem im Verhältnis zu dem Kern steiferen Material bereitgestellt. Die beiden Außenschichten bestehen vorzugsweise aus einer Aluminiumknetlegierung - wie zuvor beschrieben - und bilden nach der Bearbeitung der mehrschichtigen Platten die Außenschichten der Lamellen. Entlang der Gelenkabschnitte werden die Außenschichten auf beiden Seiten der mehrschichtigen Platte zumindest teilweise (d.h. bis zu einer gewissen Tiefe) und insbesondere vollständig entfernt (d.h. Sie wird auf ganzer Dicke durchtrennt), so dass lediglich der Kunststoffkern an den Gelenkabschnitten verbleibt. Dessen Dicke wird an den Gelenkabschnitten vorzugsweise nicht verringert. Der betreffende Abschnitt des Kerns bildet somit den jeweiligen Gelenkabschnitt. Insbesondere werden die Gelenkabschnitte in gleichmäßigen Abständen in einer Bewegungsrichtung quer zur Lamellenerstreckungsrichtung angeordnet, so dass jede Lamelle dieselben Abmessungen aufweist.

Vor oder nach dem Ausbilden der Gelenkabschnitte oder auch gleichzeitig hierzu können an den jeweils in Lamellenerstreckungsrichtung entgegengesetzten Enden die Führungsaussparungen in jede Lamelle eingebracht werden, um das Abdeckteil in Bewegungsrichtung quer zur Lamellenerstreckungsrichtung an einer Führungsschiene zum Auseinanderziehen und Zusammenschieben führen zu können. An jeder der Führungsaussparungen kann optional wenigstens ein Gleitkörper kraft- und/oder formschlüssig mit der zugeordneten Lamelle verbunden werden.

Vorteilhafte Ausgestaltungen der Schutzabdeckung und des Verfahrens zur Herstellung der Schutzabdeckung ergeben sich aus den abhängigen Patentansprüchen sowie der Beschreibung. Die Beschreibung beschränkt sich auf wesentliche Merkmale der Erfindung. Die Zeichnung ergänzt die Beschreibung. Nachfolgend werden bevorzugte Ausführungsbeispiele der Erfindung anhand der beigefügten Zeichnung im Einzelnen erläutert. Es zeigen:
Figur 1 eine schematische perspektivische Darstellung eines Ausführungsbeispiels einer Schutzabdeckung,
Figuren 2 und 3 jeweils eine mehrschichtige Platte in einer schematischen Querschnittsdarstellung zur Herstellung der erfindungsgemäßen Schutzabdeckung,
Figur 4 eine Querschnittsdarstellung von zwei unmittelbar über einen Gelenkabschnitt miteinander verbundenen Lamellen eines Abdeckteils der erfindungsgemäßen Schutzabdeckung,
Figur 5 eine schematische perspektivische Darstellung eines Ausführungsbeispiels des Abdeckteils der erfindungsgemäßen Schutzabdeckung in ausgestreckter Lage,
Figur 6 eine schematische perspektivische Teildarstellung des Abdeckteils mit Führungsmitteln an den Lamellen des Abdeckteils,
Figur 7 ein Ausführungsbeispiel der Schutzabdeckung in einer schematischen Seitenansicht, wobei die Schutzabdeckung an einer Führungseinrichtung der Bearbeitungsmaschine angeordnet ist,
Figur 8 die Schutzabdeckung aus Figur 7 in einer Teildarstellung in Draufsicht auf das Abdeckteil,
Figur 9 eine Detaildarstellung des Bereichs IX in Figur 7 im Schnittbild,
Figur 10 ein Gleitkörper eines Führungsmittels aus Figur 6 oder 9 in einer Frontalansicht,
Figur 11 der Gleitkörper aus Figur 10 im Querschnitt gemäß der Schnittlinie XI-XI und
Figur 12 der Gleitkörper aus Figur 10 in einer Draufsicht gemäß Pfeil XII in Figur 10.

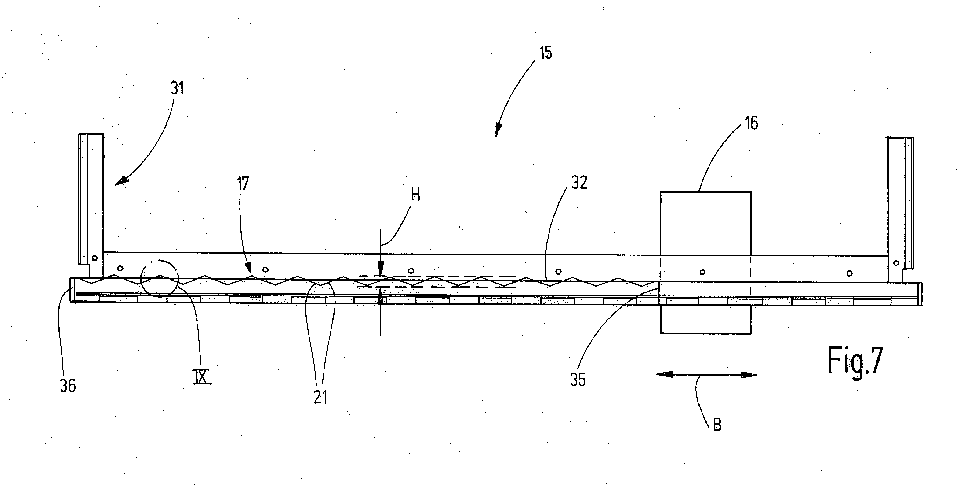

Die Erfindung betrifft eine Schutzabdeckung 15 für eine nicht dargestellte Bearbeitungsmaschine. Von der Bearbeitungsmaschine ist in Figur 7 lediglich schematisch ein in einer Bewegungsrichtung B bewegbarer Schlitten 16 veranschaulicht. An dem Schlitten 16 kann ein Bearbeitungswerkzeug oder ein Werkstück angeordnet sein, das in einem Arbeitsraum der Bearbeitungsmaschine bewegt wird. Die Schutzabdeckung 15 dient dazu, den Arbeitsraum im Bereich des bewegbaren Schlittens 16 abzugrenzen, so dass Späne und Kühlschmiermittel im Arbeitsraum gehalten werden und nicht zu Verunreinigungen von Lagern, bewegten Teilen oder anderen Maschinenelementen führen.

Die Schutzabdeckung weist ein Abdeckteil 17 auf, das zumindest abschnittsweise einen mehrschichtigen Aufbau aufweist. Eine innere Schicht des Abdeckteils 17 ist von einem in seiner Ruhelage plattenförmigen Kern 18 gebildet. Der Kern 18 ist einstückig aus einem durchgehenden Material ohne Naht- und Fügestelle hergestellt. Er erstreckt sich in Bewegungsrichtung B insbesondere entlang des gesamten Abdeckteils 17. Der Kern 18 besteht aus einem flexiblen Kunststoffmaterial vorzugsweise mit hoher innerer Dämpfung, beispielsgemäß Polypropylen. Der Kern 18 ist elastisch biegbar. Die Dicke D1 des Kerns 18 liegt im Bereich von 0,6 bis 1,2 mm. Beim Ausführungsbeispiel hat der Kern 18 eine Dicke D1 von 0,8 mm. Der Kern 18 weist entlang des gesamten Abdeckteils 17 eine konstante Dicke D1 auf.

Das Abdeckteil 17 weist in Bewegungsrichtung B nebeneinander angeordnete und gelenkig miteinander verbundene Lamellen 21 auf. Jede Lamelle 21 hat einen mehrschichtigen und beispielsgemäß dreischichtigen Aufbau. Als mittlere Schicht der Lamelle 21 dient der sich durchgängig durch das Abdeckteil 17 erstreckende Kern 18. Die beiden Flachseiten des Kerns 18 sind an jeder Lamelle 21 flächig mit einer Außenschicht 22 versehen. Die Verbindung zwischen dem Kern 18 und den Außenschichten 22 erfolgt vorzugsweise stoffschlüssig.

Das für die Außenschichten 22 verwendete Material ist verschieden vom Kunststoffmaterial des Kerns 18. Es weist eine höhere Zug- und Drucksteifigkeit als der Kern 18 auf und verleiht den Lamellen 21 dadurch eine hohe Biegesteifigkeit. Vorzugsweise wird für die Außenschichten 22 eine metallische Legierung und beispielsgemäß eine Aluminium enthaltende Legierung verwendet. Insbesondere bestehen die Außenschichten 22 aus einer Aluminiumknetlegierung, beispielsweise Al Mg 4,5 Mn 0,4. Die Dicke D2 jeder Außenschicht 22 beträgt 0,1 bis 0,3 mm und beispielsgemäß 0,2 mm. Für die Lamellen 21 ergibt sich dadurch jeweils eine Gesamtdicke von 1,2 mm beim Ausführungsbeispiel.

Der mehrschichtige Aufbau der Lamellen 21 bewirkt bei gleicher Biegesteifigkeit im Vergleich zu Lamellen aus einer Aluminiumlegierung ein deutlich reduziertes Gewicht und dadurch eine geringere Trägheit beim Bewegen bzw. Beschleunigen der Lamellen 21.

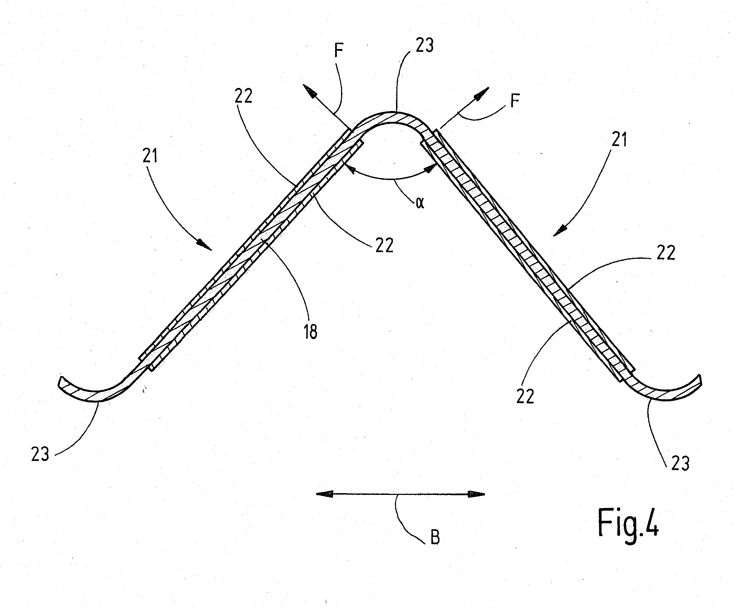

Zwei in Bewegungsrichtung B unmittelbar benachbarte Lamellen 21 sind jeweils über einen Gelenkabschnitt 23 gelenkig miteinander verbunden. Der Gelenkabschnitt 23 ist durch den entsprechenden Abschnitt 18a des Kerns 18 gebildet, der sich zwischen zwei Lamellen 21 erstreckt und die beiden Lamellen 21 miteinander verbinden. Im Bereich des Gelenkabschnitts 18 ist der Kern 18 entlang seines Abschnitts 18a frei von dem biegesteifen Material der Außenschichten 22 und insbesondere unbeschichtet. Dadurch lassen sich zwei unmittelbar benachbarte Lamellen 21 im Gelenkabschnitt 23 gegeneinander abwinkeln, was beispielsweise in Figur 4 schematisch veranschaulicht ist. Die beiden Lamellen 21 erstrecken sich dabei entlang von gegeneinander geneigten Ebenen, die einen Öffnungswinkel α miteinander einschließen.

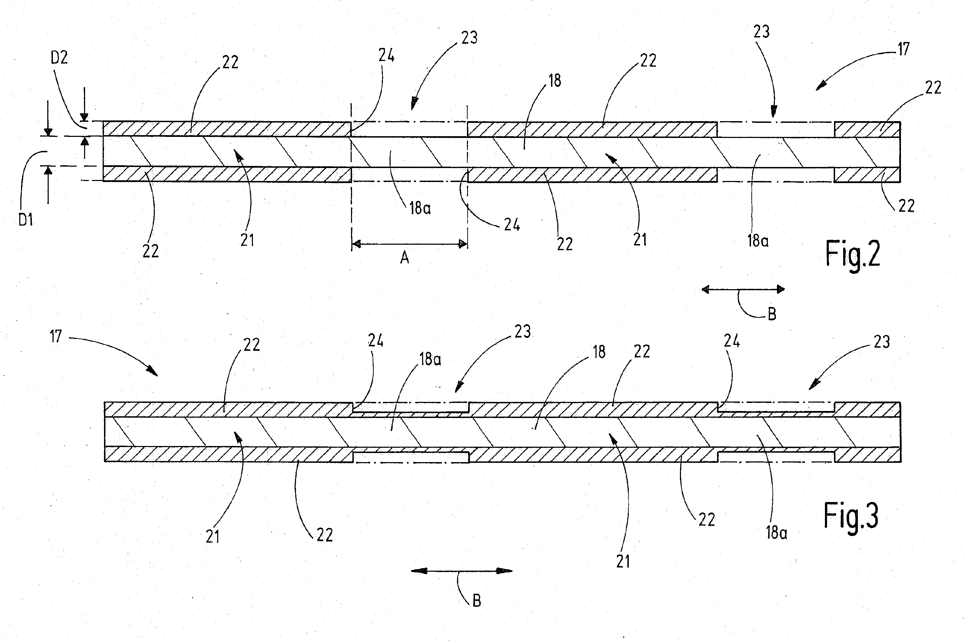

Der Abstand A zwischen zwei unmittelbar benachbarten Lamellen 21 beträgt etwa 3 bis 5 mm und beim Ausführungsbeispiel 4 mm. Dieser Abstand A wird entlang der Oberfläche des Kerns gemessen (Figuren 2 und 3). Die Länge des Abschnitts 18a des Kerns 18 im Gelenkabschnitt 23 entspricht dem Abstand A zwischen zwei Lamellen 21.

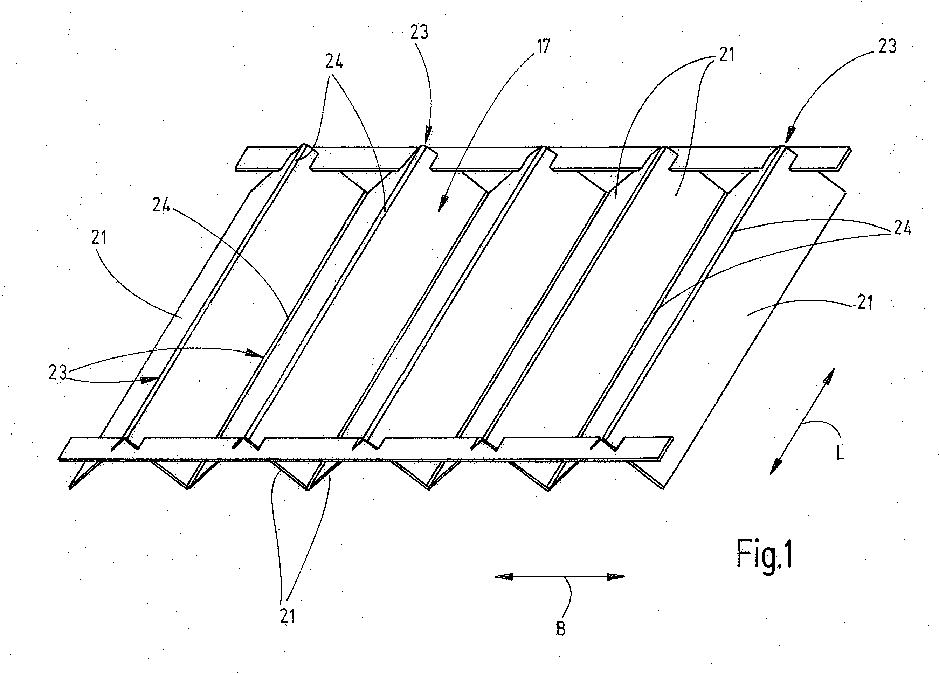

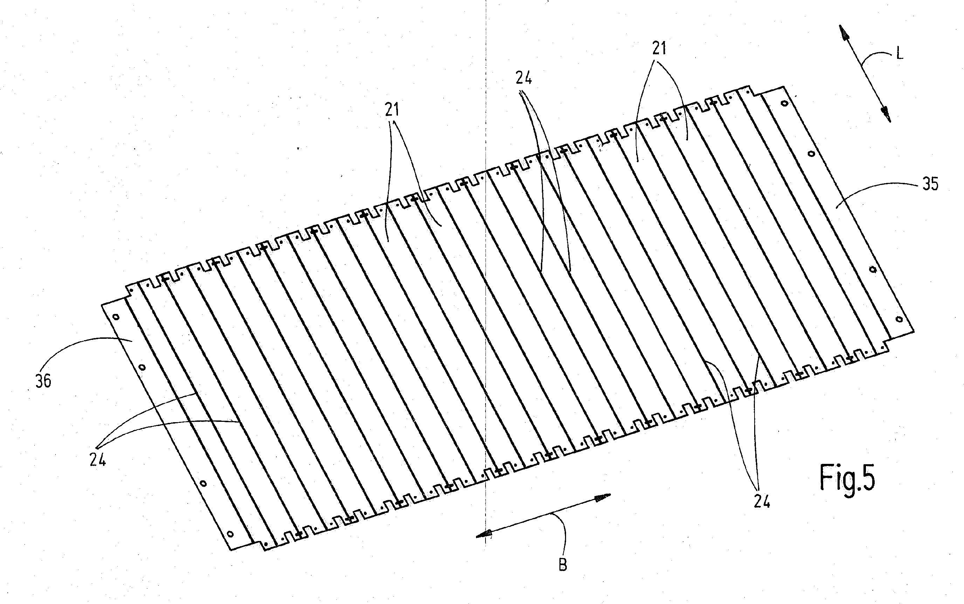

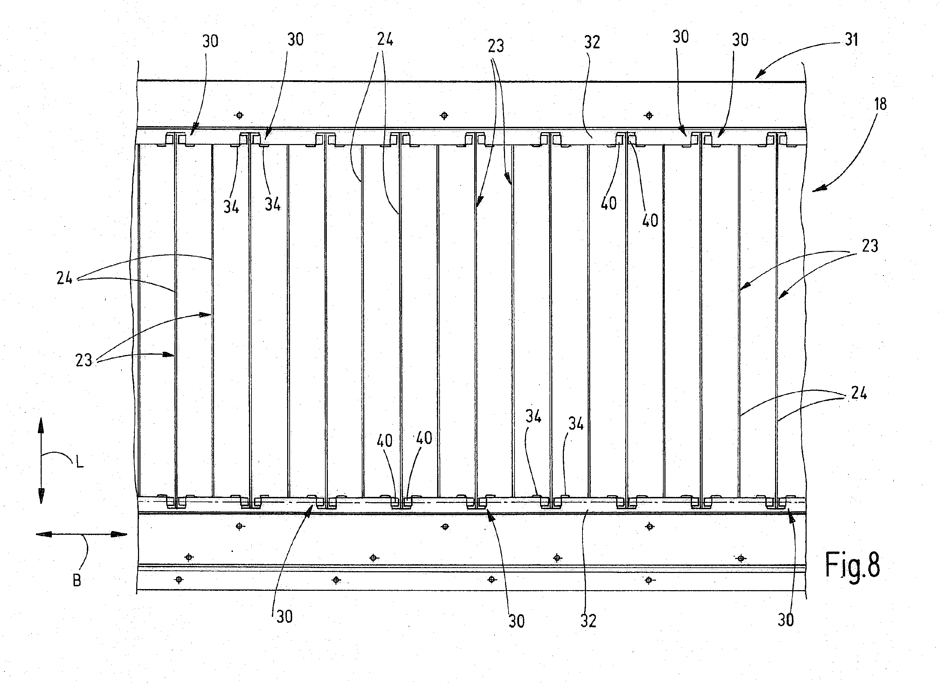

Zur Herstellung des Abdeckteils 17 wird eine mehrschichtige Platte mit dem Kern 18 und mit Außenschichten 22 auf ihren beiden Flachseiten verwendet. Die Platte wird in die gewünschte Größe zurechtgeschnitten und auf einer planen Unterlage in ebener Ausrichtung positioniert. An den Gelenkabschnitten 23 wird durch ein materialabtragendes Verfahren, beispielsweise Fräsen, die Außenschicht 22 auf beiden Seiten vollständig (Figur 2) oder zumindest teilweise (Figur 3) entfernt, so dass in jeder Außenschicht 22 an jedem Gelenkabschnitt 23 Nuten 24 mit beispielsgemäß übereinstimmender Breite entstehen. Die Nuten 24 haben vorzugsweise einen rechteckförmigen Querschnitt. In einer Lamellenerstreckungsrichtung L quer zur Bewegungsrichtung B erstrecken sich die Nuten 24 an den Gelenkabschnitten 23 parallel zueinander durch das gesamte Abdeckteil 17, was beispielsweise in den Figuren 1, 5 und 8 illustriert ist.

Bei dem in Figur 3 schematisch darstellten Herstellungsverfahren der Gelenkabschnitte 23 verbleibt nach dem Fräsen eine dünne Restbeschichtung der Außenschicht 22 am Abschnitt 18a des Kerns 18, der die beiden benachbarten Lamellen 21 verbindet. Diese verbleibende Restbeschichtung bricht beim ersten Biegen der beiden benachbarten Lamellen 21 zueinander auf, so dass die elastische Bewegbarkeit auch hier nur durch den Abschnitt 18a des Kerns 18 im Gelenkabschnitt 23 hergestellt ist. Durch das Belassen einer solchen geringen Restschicht beim Materialabtrag zur Herstellung der Nuten 24 kann verhindert werden, dass das Kunststoffmaterial des Kerns 18 in den Abschnitt 18a verletzt wird. Vorzugsweise wird jedoch - wie in Figur 2 schematisch veranschaulicht - das Material der Außenschicht 22 in den Nuten 24 vollständig entfernt.

Die Gelenkabschnitte 23 bzw. die Nuten 24 sind in Bewegungsrichtung B gleichmäßig verteilt angeordnet, so dass die Lamellen 21 jeweils übereinstimmende Abmessungen aufweisen.

Wie insbesondere in den Figuren 1, 7 und 8 zu erkennen ist, weist die Schutzabdeckung 15 Führungsmittel 30 auf, mit denen das Abdeckteil 17 in Bewegungsrichtung B bewegbar an einer Führungseinrichtung 31 angeordnet ist. Die Führungseinrichtung 31 weist beim Ausführungsbeispiel zwei sich parallel in Bewegungsrichtung B zueinander erstreckende Führungsschienen 32 auf. Die Führungseinrichtung 31 kann einen Führungsrahmen der Bearbeitungsmaschine bilden, an dem die Schutzabdeckung 15 angeordnet ist.

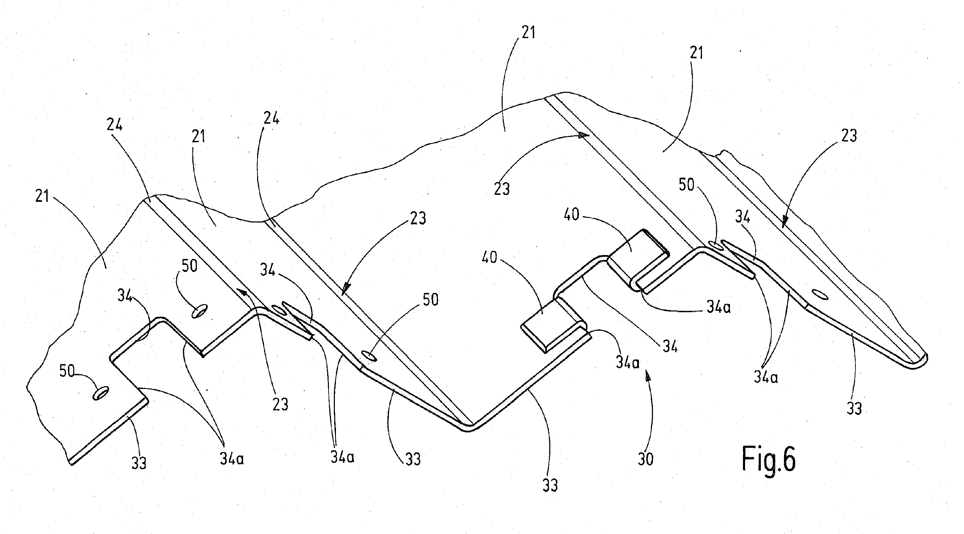

Beim Ausführungsbeispiel weist jede Lamelle 21 an seine beiden in Lamellenerstreckungsrichtung L entgegengesetzten Enden 33 jeweils ein Führungsmittel 30 auf. Zu dem Führungsmittel 30 gehört eine Führungsaussparung 34, die seitlich in Lamellenerstreckungsrichtung L offen ist. Die Führungsaussparungen 34 sind insbesondere in Figur 6 gut zu erkennen. In Gebrauchslage sind die Lamellen 21 des Abdeckteils 17 zickzackförmig entlang der Führungsschienen 32 angeordnet, die in die Führungsaussparungen 34 eingreifen. In Bewegungsrichtung B kann das Abdeckteil 17 durch die Bewegung des Schlittens 16 zusammengeschoben bzw. auseinandergezogen werden. Hierfür ist, in Bewegungsrichtung B betrachtet, das eine, erste Ende 35 des Abdeckteils 17 mit dem Schlitten 16 verbunden, während das in Bewegungsrichtung B dem ersten Ende 35 entgegengesetzte zweite Ende 36 des Abdeckteils 17 mit der Führungseinrichtung 31 fest verbunden ist. Abhängig von der Position des Schlittens 16 kann somit der Öffnungswinkel α zwischen zwei jeweils benachbarten Lamellen 21 variieren. Dabei ändert sich auch die Höhe H des Raumes, der vom Abdeckteil 17 eingenommen wird. Die Höhe H wird in einer Richtung rechtwinklig zu der Ebene gemessen, die durch die Bewegungsrichtung B und durch die Lamellenerstreckungsrichtung L aufgespannt wird.

Die Führungsaussparungen 34 sind beispielsgemäß außermittig in der Lamelle 21 zwischen zwei Gelenkabschnitten 23 angeordnet. Durch die außermittige Anordnung der Führungsaussparungen 34 zwischen den beiden Gelenkabschnitten 23 einer Lamelle 21 wird die Höhenänderung beim Bewegen bzw. Verschieben des Abdeckteils 17 auf den beiden Seiten einer Ebene, in der sich die Führungsschienen 32 erstrecken, unterschiedlich verteilt. Dies ist dann vorteilhaft, wenn zum Beispiel auf der einen Seite der Führungsschienen 32 durch andere Bestandteile der Bearbeitungsmaschine wenig Raum für das Abdeckteil 17 zur Verfügung steht. Dann können die Führungsaussparungen 34 näher an den Gelenkabschnitten 23 angeordnet sein, die auf dieser Seite angeordnet sind, als an den jeweils auf der anderen Seite der Ebene entlang der Führungsschienen 32 angeordneten Gelenkabschnitten 23. Dadurch erfolgt die Höhenänderung der Höhe H nur zu einem kleineren Teil auf der einen Seite und zu einem größeren Teil auf der anderen Seite der Führungsschienen 32.

Im Querschnitt sind die Führungsaussparungen 34 beim Ausführungsbeispiel rechteckförmig oder quadratisch konturiert. Abhängig von der Querschnittsform der Führungsschiene 32 kommen hier auch andere Querschnittskonturen in Betracht. Die Führungsaussparungen 34 können zur Herstellung des Abdeckteils 17 durch ein materialabtragendes Verfahren, beispielsweise Fräsen, Laserschneiden, Wasserstrahlschneiden, usw. eingebracht werden.

Bei dem hier beschriebenen Ausführungsbeispiel weist jedes Führungsmittel 30 außerdem wenigstens einen und beispielsgemäß zwei Gleitkörper 40 auf. Die beiden Gleitkörper 40 umgreifen die beiden sich gegenüberliegenden, in Lamellenerstreckungsrichtung L verlaufenden Kanten 34a der Führungsaussparung 34, wodurch die Lamellen 21 nicht unmittelbar in Gleitkontakt mit den Führungsschienen 32 stehen. Über die Gleitkörper 40 kann die Gleitreibung zwischen dem Abdeckteil 17 und den Führungsschienen 32 verringert werden.

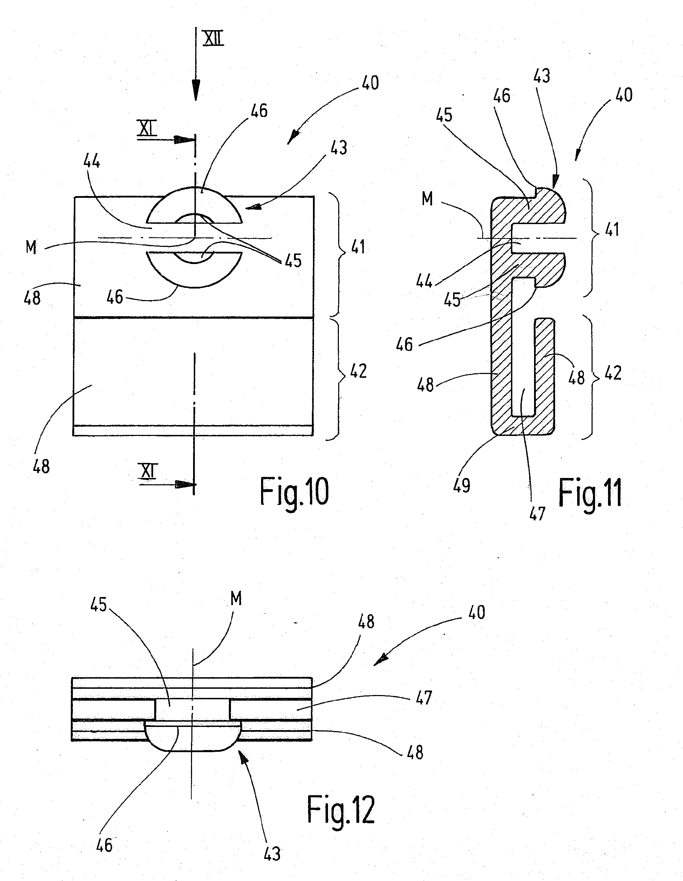

Ein Gleitkörper 40 ist in den Figuren 10 bis 12 im Einzelnen dargestellt. Der Gleitkörper 40 weist einen Befestigungsteil 41 und einen sich daran anschließenden Aufnahmeteil 42 auf. Am Befestigungsteil 41 ist ein Rastkopf 43 vorhanden. Der Rastkopf 43 hat eine in etwa pilzförmige Form, die durch einen Schlitz 44 in zwei Kopfteile 45 unterteilt ist. An jedem Kopfteil 45 ist eine Rastnase 46 vorhanden, die in etwa kreisbogenförmig um eine Mittellängsachse M des Rastkopfes 43 verläuft. Die Mittellängsachse M erstreckt sich durch den Schlitz 44. Über die Rastnase 46 wird jeder Kopfteil 45 radial zur Mittellängsachse M erweitert.

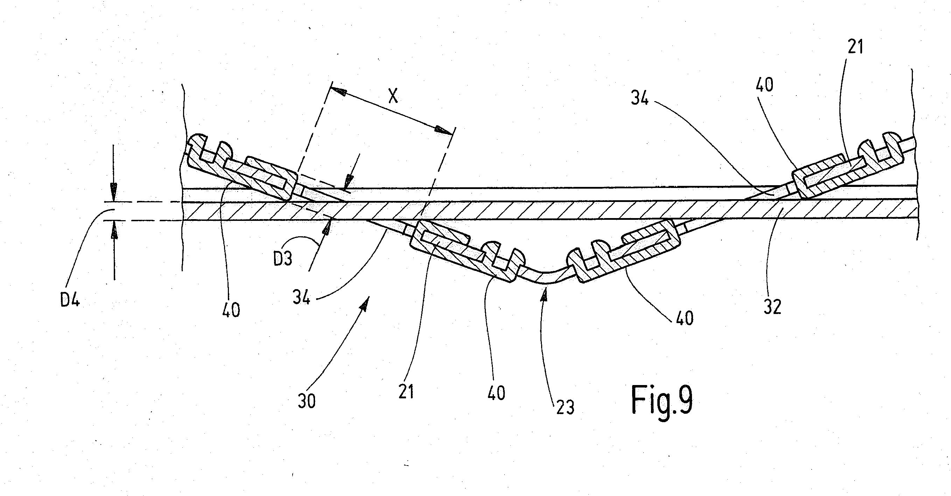

Der Aufnahmeteil 42 des Gleitkörpers 40 weist einen Aufnahmebereich 47 auf, der von zwei in etwa parallel zueinander verlaufenden plattenförmigen Schenkeln 48 des Gleitkörpers 40 begrenzt ist. An der Verlängerung des einen Schenkels 48 ist im Befestigungsteil 41 der Rastkopf 43 angeordnet. Der andere Schenkel 48 endet am Übergang zwischen dem Aufnahmeteil 42 und dem Befestigungsteil 41. Die beiden Schenkel 48 sind auf der dem Rastkopf 43 entgegengesetzten Seite über einen Querschenkel 49 miteinander verbunden. Die beiden Schenkel 48 und der Querschenkel 49 umgreifen die Kante 34a der Führungsaussparung 34, was beispielsweise in den Figuren 6 und 9 veranschaulicht ist. Dabei befindet sich ein an die Kante 34a anschließender Teil der Lamelle 21 innerhalb des Aufnahmebereichs 47 des Gleitkörpers 40 und wird von den beiden plattenförmigen Schenkeln 48 von entgegengesetzten Seiten abgedeckt. Der Querschenkel 49 erstreckt sich zumindest entlang eines Abschnitts der Kante 34a der Führungsaussparung 34.

Zur kraft- und/oder formschlüssigen Befestigung des Gleitkörpers 40 dient der Rastkopf 43. Benachbart zu jeder Kante 34a einer Führungsaussparung 34 ist ein Befestigungsloch 50 in der Lamelle 21 vorhanden. Der Rastkopf 43 wird durch das Befestigungsloch 50 gedrückt, wobei über die beiden Rastnasen 46 der Rastvorsprünge 45 eine Rastverbindung mit der Lamelle 21 hergestellt wird. Die Befestigungslöcher 50, an denen noch kein Rastkörper 40 angebracht ist, sind in Figur 6 zu erkennen. Es versteht sich, dass die Darstellung gemäß Figur 6 nur der Veranschaulichung dient und insbesondere jedes Führungsmittel 30 zwei Gleitkörper 40 aufweist.

Beispielsgemäß ist ein Begrenzungsmittel vorhanden, das verhindert, dass zwei über einen Gelenkabschnitt 23 miteinander gelenkig verbundene Lamellen 21 einen Öffnungswinkel α von 180° einnehmen können. Über das Begrenzungsmittel wird der Öffnungswinkel α auf einem Wert kleiner als 180° begrenzt, beispielsweise auf 150°. Bei dem hier beschriebenen Ausführungsbeispiel ist das Begrenzungsmittel durch die Führungsschiene 32 und das Führungsmittel 30 gebildet. Ein Spiel zwischen der Führungsschiene 32 und dem Führungsmittel 30 ist durch den Abstand X zwischen den beiden Gleitkörpern 40 eines Führungsmittels 30, einer Dicke D3 des Gleitkörpers 40, insbesondere des Aufnahmeteils 42 des Gleitkörpers 40, sowie einer Dicke D4 bzw. der Höhe der Führungsschiene 32 bestimmt. Über diese Parameter X, D3, D4 kann der Öffnungswinkel α vorgegeben und eingestellt werden. Der maximale Öffnungswinkel α ergibt sich, wenn die Gleitkörper 40 zweier benachbarter Lamellen 21 mit der Führungsschiene 32 in Kontakt sind, wie es in Figur 9 schematisch veranschaulicht ist.

Die Schutzabdeckung 15 arbeitet wie folgt:
Über den Schlitten 16 wird das eine, erste Ende 35 des Abdeckteils 17 bewegt bzw. beschleunigt, während das andere Ende 36 beispielsgemäß unbeweglich mit der Führungseinrichtung 31 oder an einem anderen Teil der Bearbeitungsmaschine verbunden ist. Jeder Gelenkabschnitt 23 des Abdeckteils 17 bildet eine inhärent gedämpfte Feder. Diese Feder drängt die beiden über den Gelenkabschnitt 23 verbundenen Lamellen 21 in eine Lage, in der sie sich entlang einer gemeinsamen Ebene erstrecken. Die Federwirkung ist durch die Pfeile F in Figur 4 schematisch dargestellt. Mit anderen Worten, die Federwirkung des Gelenkabschnitts 23 erzeugt ein Drehmoment auf die beiden sich anschließenden Lamellen 21 um eine sich in Lamellenerstreckungsrichtung L erstreckende Achse entlang des betreffenden Gelenkabschnitts 23. Durch diese Federwirkung ist erreicht, dass beim Bewegen des ersten Endes 35 des Abdeckteils 17 die Öffnungswinkel α zwischen jeweils zwei benachbarten Lamellen 21 entlang des Abdeckteils 17 gleich groß werden. Bei einer sprungartig beschleunigten Bewegung des Schlittens 16 werden die Öffnungswinkel α zwischen den Lamellen 21 mit Unterstützung der Federwirkung der Gelenkabschnitte 23 ausgeglichen. Die innere Dämpfung wirkt der Ausbildung einer Schwingung entgegen, so dass sich in Bewegungsrichtung B keine Longitudinalschwingung ausbildet. Auch wenn der Schlitten 16 mit großer Beschleunigung zunächst in eine und dann in die entgegengesetzte Richtung bewegt wird - was die maximale Beanspruchung des Abdeckteils 17 bewirkt - erfolgt keine nennenswerte Schwingungsanregung des Abdeckteils 17, weil sich die Öffnungswinkel α zwischen den Lamellen 21 in der gesamten Erstreckung des Abdeckteils 17 rasch angleichen und die in dem Schwung der Lamellen enthaltene kinetische Energie in den Gelenkabschnitten 23 dissipiert wird. Die Lamellen 21 verformen sich dabei nicht. Bei einer sprungartig beschleunigten Bewegung des Schlittens 16 ist die Änderung der Öffnungswinkel α sozusagen im Wesentlichen der Kriechfall oder mindestens der aperiodische Grenzfall, wobei sich aufgrund der dämpfenden Wirkung des Aufbaus des Abdeckteils 17 keine längere Logitudinalschwingung einstellt. Dadurch werden die Belastungen des Abdeckteils 17 erheblich reduziert. Es ist deshalb möglich, den Schlitten 16 mit hohen Beschleunigungen und hohen Geschwindigkeiten zu bewegen. Beim Ausführungsbeispiel können beispielsweise Beschleunigungen von etwa 7 m/s² und Geschwindigkeiten von bis zu 120 m/min des Schlittens 16 erreicht werden, denen die Schutzabdeckung 15 standhält.

Die Erfindung betrifft eine Schutzabdeckung 15 sowie ein Verfahren zu deren Herstellung. Die Schutzabdeckung 15 wird aus einer mehrschichtigen Platte aus einem Verbundwerkstoff hergestellt, die einen Kern 18 aus Kunststoff sowie auf den beiden entgegengesetzten Flachseiten des Kerns 18 jeweils eine Außenschicht 22 aus einer metallischen und beispielsgemäß Aluminium enthaltenden Legierung aufweist. An Gelenkabschnitten 23 werden die beiden Außenschichten 22 durch Einbringen von Nuten 24 entfernt, wobei die Nuten 24 sich in einer Lamellenerstreckungsrichtung L geradlinig durch ein Abdeckteil 17 der Schutzabdeckung 15 erstrecken. Dadurch werden Lamellen 21 gebildet, die einen mehrschichtigen Aufbau aufweisen, wobei jeweils zwei unmittelbar benachbarte Lamellen 21 gelenkig durch einen Gelenkabschnitt 23 miteinander verbunden sind. Das so gebildete Abdeckteil 17 lässt sich ziehharmonikaartig zusammenschieben bzw. auseinanderziehen. Es ist außerdem sehr einfach herzustellen. Das Abdeckteil 17 weist eine Federwirkung sowie eine Dämpfungswirkung auf. Dadurch ist es möglich, ein mit einem Schlitten 16 einer Bearbeitungsmaschine verbundenes bewegtes Ende 35 des Abdeckteils 17 mit hohen Geschwindigkeiten und Beschleunigungen zu bewegen ohne eine Longitudinalschwingung anzuregen, die das Abdeckteil 17 beschädigen könnte.

### Bezugszeichenliste:

- 15: Schutzabdeckung
- 16: Schlitten
- 17: Abdeckteil
- 18: Kern
- 18a: Abschnitt des Kerns zwischen zwei Lamellen

- 21: Lamelle
- 22: Außenschicht
- 23: Gelenkabschnitt
- 24: Nut

- 30: Führungsmittel
- 31: Führungseinrichtung
- 32: Führungsschiene
- 33: Ende der Lamelle
- 34: Führungsaussparung
- 35: erstes Ende des Abdeckteils
- 36: zweites Ende des Abdeckteils

- 40: Gleitkörper
- 41: Befestigungsteil
- 42: Aufnahmeteil
- 43: Rastkopf
- 44: Schlitz
- 45: Kopfteil
- 46: Rastnase
- 47: Aufnahmebereich
- 48: Schenkel
- 49: Querschenkel

- α: Öffnungswinkel
- A: Abstand
- B: Bewegungsrichtung
- D1: Dicke des Kerns
- D2: Dicke der Außenschicht
- D3: Dicke des Gleitkörpers
- D4: Dicke der Führungsschiene
- H: Höhe
- M: Mittellängsachse

## Patentansprüche

1. Schutzabdeckung (15) für eine Bearbeitungsmaschine,
mit einem mehrschichtigen Abdeckteil (17), das mehrere miteinander verbundene Lamellen (21) aufweist,
wobei das Abdeckteil (17) einen Kern (18) aus einem Kunststoffmaterial aufweist,
wobei die Lamellen (21) zwei Außenschichten (22) aufweisen, die auf dem Kern (18) auf entgegengesetzten Seiten vorhanden sind,
wobei zwei unmittelbar benachbarte Lamellen (21) jeweils über einen Gelenkabschnitt (23) des Abdeckteils (17) gelenkig miteinander verbunden sind, wobei die Gelenkabschnitte (23) von einem jeweiligen Abschnitt (18a) des Kerns (18) gebildet sind.

2. Schutzabdeckung nach Anspruch 1, **dadurch gekennzeichnet, dass** der Kern (18) aus einem einheitlichen Material ohne Naht- oder Fügestellen besteht.

3. Schutzabdeckung nach Anspruch 1 oder 2, **dadurch gekennzeichnet, dass** sich der Kern (18) durchgehend entlang des gesamten Abdeckteils (17) erstreckt.

4. Schutzabdeckung nach einem der vorhergehenden Ansprüche, **dadurch gekennzeichnet, dass** der Kern (18) an den Gelenkabschnitten (23) eine Federwirkung (F) bereitstellt und/oder dass der Kern (18) eine Dämpfungswirkung bereitstellt.

5. Schutzabdeckung nach einem der vorhergehenden Ansprüche, **dadurch gekennzeichnet, dass** die Gelenkabschnitte (23) von den beiden Außenschichten (22) frei sind.

6. Schutzabdeckung nach einem der vorhergehenden Ansprüche, **dadurch gekennzeichnet, dass** die Dicke (D1) des Kerns (18) an jedem der Gelenkabschnitte (23) genauso groß ist wie an den beiden angrenzenden Lamellen (21).

7. Schutzabdeckung nach einem der vorhergehenden Ansprüche, **dadurch gekennzeichnet, dass** an jedem der Gelenkabschnitte (23) in einer Lamellenerstreckungsrichtung (L) in beiden Außenschichten (22) jeweils eine Nut (24) vorhanden ist, wobei die beiden Nuten (24) eines Gelenkabschnitts (23) vorzugsweise gleich breit und vorzugsweise deckungsgleich zueinander angeordnet sind.

8. Schutzabdeckung nach einem der vorhergehenden Ansprüche, **dadurch gekennzeichnet, dass** die Außenschichten (22) Metall und vorzugsweise Aluminium aufweisen.

9. Schutzabdeckung nach einem der vorhergehenden Ansprüche, **dadurch gekennzeichnet, dass** jede Lamelle (21) an in Lamellenerstreckungsrichtung (L) entgegengesetzten Enden jeweils ein Führungsmittel (30) aufweist.

10. Schutzabdeckung nach Anspruch 9, **dadurch gekennzeichnet, dass** das Führungsmittel (30) eine Führungsaussparung (34) aufweist.

11. Schutzabdeckung nach einem der vorhergehenden Ansprüche, **dadurch gekennzeichnet, dass** ein Begrenzungsmittel vorhanden ist, das den Öffnungswinkel (α) zwischen zwei unmittelbar benachbarten Lamellen (21) begrenzt.

12. Schutzabdeckung nach Anspruch 9 und Anspruch 11,
**dadurch gekennzeichnet, dass** als Begrenzungsmittel eine mit dem Führungsmittel (30) zusammenarbeitenden Führungsschiene (32) dient.

13. Schutzabdeckung nach einem der Ansprüche 8 bis 12,
**dadurch gekennzeichnet, dass** das Führungsmittel (30) außerdem wenigstens ein Gleitkörper (40) aufweist.

14. Schutzabdeckung nach Anspruch 13, **dadurch gekennzeichnet, dass** der Gleitkörper (40) kraftschlüssig und/oder formschlüssig mit der Lamelle (21) des Abdeckteils (17) verbunden ist.

15. Verfahren zur Herstellung einer Schutzabdeckung (15) für eine Bearbeitungsmaschine, mit folgenden Schritten:
- Bereitstellen einer mehrschichtigen Platte mit einem Kern (18) aus flexiblem Kunststoffmaterial, der auf seinen beiden Flachseiten jeweils mit einer Außenschicht (22) aus einem Material beschichtet ist, das im Vergleich zu dem Kern eine höhere Zug- und Druckfestigkeit aufweist,
- Herstellung eines Abdeckteils (17) mit mehreren über jeweils einen Gelenkabschnitt (23) gelenkig miteinander verbundener Lamellen (21) aus der Platte durch Einbringen jeweils einer Nut (24) in die beiden Außenschichten (22) an jedem Gelenkabschnitt (23), so dass die Gelenkabschnitte (23) von einem jeweiligen Abschnitt des Kerns (18) der mehrschichtigen Platte gebildet sind.
